# EUROPÄISCHE PATENTSCHRIFT

(11) **EP 0 335 300 B1**
(45) Veröffentlichungstag und Bekanntmachung des Hinweises auf die Patenterteilung: **29.09.1993**
(21) Anmeldenummer: 89105368.8
(22) Anmeldetag: 25.03.1989
(51) Int. Cl.: F16K 7/10, F16L 55/12

(54) **Dichtkissen zum Verstopfen von Öffnungen und Durchgängen**
Inflatable plug to block holes and passages
Bouchon gonflable pour l'obturation de trous et passages

(30) Priorität: 28.03.1988 DE 3810515
(43) Veröffentlichungstag der Anmeldung: 04.10.1989
(73) Patentinhaber: Göbel, Gerd, D-60386 Frankfurt (DE)
(72) Erfinder: Göbel, Gerd, D-60386 Frankfurt (DE)
(74) Vertreter: Oppermann, Ewald, Dipl.-Ing.

(56) Entgegenhaltungen:
- DE-A- 2 123 386
- GB-A- 2 140 894
- US-A- 4 565 222

## Beschreibung

Die Erfindung bezieht sich auf ein aufblasbares Dichtkissen zum Verstopfen von Öffnungen oder Durchgängen, insbesondere von Kanaleinläufen und Rohren, bestehend aus einem Sack aus dünnem, flexiblem Kunststoffmaterial, der an einem Ende dicht verschlossen ist, an seinem anderen Ende mit einem Aufblasstutzen abgedichtet verbunden ist und gegenüber der abzudichtenden Öffnung oder dem abzudichtenden Durchgang Übermaß aufweist.

Im industriellen und kommunalen Bereich ergibt sich häufig das Erfordernis, Öffnungen und Durchgänge zum Schutz der Umwelt und/oder zur Zurückhaltung von Wertstoffen zeitweilig und rasch verschließen zu können. Beispielsweise müssen Kanaleinläufe zur Verhinderung des Eindringens von Öl, Treibstoffen, Chemikalien usw. in das Kanalsystem dicht verschlossen werden. Umgekehrt sind auch gelegentlich Kanaleinläufe gegen das Hochdrücken von Flüssigkeiten und/oder Gasen aus dem Kanalsystem zu verschließen. Öffnungen an Behältern, Wänden, Silos und dgl., beispielsweise Mannlöcher, Reinigungs- und Reparaturöffnungen, aber auch Rohröffnungen und dgl. sind häufig gegen den unerwünschten Durchtritt oder Austritt von Flüssigkeiten, Gasen, Dämpfen oder auch Stäuben zu verschließen, was insbesondere in Notfällen schnell geschehen muß, um größere Schäden zu vermeiden.

Die für diese Einsatzzwecke bekannten aufblasbaren Dichtkissen (Firmendruckschrift "Feuerwehr-Katalog 1985/87", S. 172, Albert Ziegler GmbH & Co. KG, D-7928 Giengen/Brenz) sind zylindrische formstabile Gebilde aus synthetischem durch Wandeinlagen armiertem Kautschuk, die zur Form- und Druckhaltung beträchtliche Wanddicken aufweisen, beispielsweise etwa 6 mm. Diese bekannten Dichtkissen werden in den Kanaleinlauf oder das Rohr eingeschoben, wozu sie wegen ihrer Formstabilität Untermaß aufweisen müssen. Beim anschließenden Aufblasen werden die Dichtkissen durch Anwendung entsprechend hoher Drücke (1,5 bis 2 bar) elastisch aufgeweitet und sollen sich dabei dicht an die Wand des Kanaleinlaufs oder des Rohres anlegen. Aufgrund ihres elastischen Verhaltens, ihrer zylindrischen Ausgangsform und ihrer Wanddicke können die bekannten Dichtkissen nur glattflächige, vorsprungs- und vertiefungslose Wandflächen zufriedenstellend abdichten. Sie versagen bei von der Kreisform wesentlich abweichenden Querschnitten, beispielsweise bei Rechteckeinläufen, können wegen ihrer steifen Zylinderform nicht in Rohrbögen eingeführt werden, müssen für unterschiedliche Durchmesser von Kanaleinläufen und Rohren in einer Vielzahl von Abmessungen bereitgehalten werden und sind aufgrund ihres Werkstoffs und ihrer Formgebung teuer. Ihr beträchtliches Gewicht und Ruhevolumen erschwert Unterbringung, Transport und Handhabung. Unebenheiten in Öffnungs- und Kanalwänden und -rändern, wie Stufen, Vertiefungen, Vorsprünge oder sonstige Oberflächenstrukturen, wie unregelmäßige Ablagerungen, Korrosionsstellen und dgl., werden von dem dickwandigen elastischen Werkstoff der bekannten Dichtkissen ohne Formschluß nur überspannt, woraus unvollständige Abdichtwirkungen resultieren. Schließlich sind die elastomeren Werkstoffe der bekannten Dichtkissen auch nicht gegen alle abzudichtenden Medien hinreichend beständig.

Es ist auch schon vorgeschlagen worden (DE-A-18 17 394), Hohlkörper durch eine mittels eines Druckmediums ausdehnbare Blase abzudichten, die zunächst in schlaffem Zustand in den abzudichtenden Hohlkörper eingebracht und anschließend durch das Druckmedium ausgedehnt wird, wobei sich die Blase wegen ihrer Elastizität an die Wandungen des Hohlkörpers selbst bei unregelmäßigen Formen oder unebenen Flächen anschmiegen soll. Da die Blase jedoch elastisch ist, kann auch sie den abzudichtenden Wandungen bei Vorhandensein der vorstehend erläuterten Unebenheiten nicht überall im Formschluß anliegen, sondern wird Unebenheiten ohne Formschluß elastisch überspannen, so daß auch hierbei keine vollständige Abdichtung erhalten wird.

Bei einem bekannten aufblasbaren Dichtkissen (US-A-4,565,222) der eingangs angegebenen Gattung erfährt der aus dünnem, flexiblem Kunststoffmaterial gebildete Sack bei seiner Herstellung eine eigentümliche Plissierung oder Faltung. Hierbei wird die zu einem Zylinder zusammengefügte Kunststoffolie in eine Anzahl von Falten gelegt, die sich parallel zu der Längsachse des Sacks erstrecken und die um einen festen Zylinderstopfen herumgelegt und daran durch Klemmung festgelegt sind. Auf diese aufwendige Weise wird ein vorgefalteter Kunststoffsack eigentümlicher Formgebung gebildet, der sich wegen des festen Stopfens und auch wegen der bei der Herstellung entstehenden Falten nicht vollständig flachlegen läßt.

Der Erfindung liegt die Aufgabe zugrunde, ein Dichtkissen der eingangs angegebenen Art unter Vermeidung der aufgezeigten Nachteile vorzuschlagen, welches unabhängig von der Querschnittsform und Wandungsbeschaffenheit der abzudichtenden Öffnung oder des Durchgangs eine zuverlässige Abdichtung ermöglicht, auch in Rohrbögen verwendet werden kann, leicht unterzubringen und zu transportieren ist und bei einfacher Handhabbarkeit auch noch einfach und preisgünstig herstellbar ist.

Die gestellte Aufgabe wird erfindungsgemäß dadurch gelöst, daß der Sack aus einer im wesentlichen unelastischen thermoplastischen Kunststoffolie einer Foliendicke zwischen etwa 50 µm und 500 µm gebildet ist, an seinem dichtverschlossenen Ende nur durch in der Kunststoffolie angebrachte Nähte verschlossen ist, im unaufgeblasenen Zustand ohne Faltenbildung flach zusammenlegbar ist und sich beim Aufblasen unter Faltenbildung dicht an die Ränder und Wandungen der Öffnung oder des Durchgangs anlegt.

Das erfindungsgemäße Dichtkissen läßt sich mit vergleichsweise geringem Druck (etwa 0,2 bis 0,5 bar) aufblasen, weil es nicht elastisch gedehnt, sondern im wesentlichen nur aufgerichtet werden muß und nur eine vergleichsweise geringe Wanddicke aufweist. Trotz der aufgrund seines Übermaßes, d.h. seines im Vergleich zum Umfang der abzudichtenden Öffnung oder des Durchgangs größeren Umfangs, eintretenden Faltenbildung kommt es zu einer praktisch vollständigen Abdichtung, weil auch die Falten des dünnen Folienwerkstoffs flächig dicht aufeinanderliegen. Hierbei nimmt das aufgeblasene Kissen an seinem Umfang formschlüssig die Gestalt der zu verstopfenden Öffnung oder des Durchgangs an, wobei es ggf. zu beiden Seiten der engsten Stelle der Öffnung oder des Durchgangs infolge seines Übermaßes ausbaucht und damit in beiden Richtungen fest verankert wird. Auch Vorsprünge und Vertiefungen der Öffnungs- oder Durchgangswandung werden praktisch im Formschluß von der Folienwand des sackartigen Kissens ausgefüllt bzw. eingehüllt. Der aus flexibler Kunststoffolie gebildete Sack läßt sich im unaufgeblasenen Zustand ohne Faltenbildung vollständig flach zusammenlegen, hat daher nur einen geringen Raumbedarf und besitzt ein für den Transport und die Handhabung günstiges niedriges Gewicht. Es liegt auf der Hand, daß sich ein derartiger vollständig flachliegend herstellbarer Foliensack kostengünstig herstellen läßt. Infolge des erforderlichen Übermaßes des Foliensacks läßt sich mit einer einheitlichen Sackgröße und -form eine Vielzahl von unterschiedlich geformten Öffnungen oder Durchgängen verschließen, wobei für die verschiedenen Öffnungs- und Durchgangsgrößen keine unterschiedlichen oder jedenfalls nur sehr wenige Sackgrößen und -formen vorzusehen sind. Der erfindungsgemäße Foliensack kann auch leicht in Rohrbögen eingeführt werden, weil er bei der Anbringung in der zu verstopfenden Stelle nicht oder nur teilweise aufgeblasen ist und in diesem Zustand infolge der Flexibilität der Folie in jede das Einführen erleichternde Form gebracht werden kann. Da für das Aufblasen des erfindungsgemäßen Dichtkissens keine hohen Drücke erforderlich sind, sind zum Aufblasen einfache Vorrichtungen ausreichend, beispielsweise gewöhnliche Luftpumpen. Bei kleineren Abmessungen ist sogar eine Mundaufblasung möglich.

Das erfindungsgemäße Dichtkissen läßt sich besonders einfach herstellen, wenn der Sack aus einem Folienschlauchabschnitt gebildet ist, der an einem Ende vollständig verschlossen ist und an seinem Aufblasende für den Anschluß eines Aufblasstutzens sich flaschenhalsförmig verjüngt.

Die einfachste Ausbildung liegt dann vor, wenn der vollständige Verschluß des Sackes an seinem einen Ende durch eine durchgehende dichte Quernaht erzieht ist. Die Anordnung kann gewünschtenfalls aber auch so vorgesehen sein, daß der vollständige Verschluß des Sackes an seinem einen Ende durch eine gesondert eingesetzte Folienwand erzielt ist, die an ihrem Umfang durch eine dichte Naht mit der Sackwand verbunden ist.

Auch am Aufblasende sind verschiedene Gestaltungen möglich. Eine einfache Ausgestaltung wird dann erhalten, wenn das Aufblasende des Sackes sich flaschenhalsförmig verjüngend zugeschnitten und an den Zuschnittkanten durch dichte Nähte verschlossen ist. Es ist jedoch auch eine Ausgestaltung möglich, bei der das sich flaschenhalsförmig verjüngende Aufblasende des Sackes durch einen gesondert eingesetzten Folientrichter gebildet ist, der an dem Umfang seiner größeren Öffnung durch eine dichte Naht mit der Sackwand verbunden und an seiner kleineren Öffnung für den Anschluß des Aufblasstutzens ausgebildet ist.

Soll der Sack nicht aus einem Folienschlauchabschnitt hergestellt werden, ist in einer Weiterbildung der Erfindung vorgesehen, daß der Sack aus zwei aufeinanderliegenden identischen Folienwänden gebildet ist, die mindestens an ihren Seitenkanten durch dichte Nähte miteinander verbunden sind. Wird eine nach dem Aufblasen ohne Einsetzung des Dichtkissens in eine zu verstopfende Öffnung oder einen Durchgang im wesentlichen zylindrische Form gewünscht, so ist zweckmäßig die Anordnung so zu treffen, daß bei flach und ausgebreitet liegendem Sack seine Seitenkanten parallel zueinander verlaufen. Diese Ausgestaltung ist auch für das Verstopfen von Rohren besonders vorteilhaft. Werden dagegen für andere Anwendungszwecke kegelförmige oder kegelstumpfförmige (aufgeblasene) Schlauchformen gewünscht, so lassen sich diese auf einfache Weise dadurch erzielen, daß bei flach und ausgebreitet liegendem Sack seine Seitenkanten in Richtung eines der beiden Sackenden zueinander konvergierend verlaufen.

In Weiterführung des Erfindungsgedankens ist vorgesehen, daß der Sack aus einer Folie aus einem Kunststoff, ausgewählt aus der Gruppe Polyethylen, Polypropylen und Polyvinylchlorid, gebildet ist. Die Foliendicke beträgt vorzugsweise etwa 200 µm.

Die den Sack dicht verschließenden Nähte könnten als Klebenähte ausgebildet sein, für thermoplastische Folien ergibt sich jedoch ohne Klebstoffanwendung eine zuverlässige Abdichtung, wenn die den Sack dicht verschließenden Nähte als Schweißnähte ausgebildet sind.

In weiterer Ausbildung des Erfindungsgedankens endet der Sack an seinem Aufblasende mit einem aus seiner Folie gebildeten Kanal, der einerseits mit dem Innenraum des Sackes verbunden ist und andererseits mit einer äußeren Öffnung endet, in welche ein den Aufblasstutzen bildendes Rohr einführbar ist, an welchem die den Kanal bildende Folienwand dicht anschließbar ist.

Zur Erzielung eines dichten Anschlusses ist die Anordnung vorteilhaft so getroffen, daß die den Kanal bildende Folienwand unter Zwischenlage einer auf das Rohr aufgesteckten weichen Dichtungsmanschette durch mindestens eine Schlauchschelle an das Rohr anschließbar ist. Das Rohr ist zweckmäßig über ein darin als Absperrglied angebrachtes den Aufblasdruck begrenzendes Rückschlagventil mit einer Druckgasquelle verbindbar. Hierbei kann es sich um eine stationäre Druckgasquelle, beispielsweise einen durch einen fest installierten Kompressor versorgte Preßluftleitung, aber auch um eine bewegliche Druckgasquelle in Form einer Druckgasflasche handeln. Um ein übermäßiges Aufblasen des Dichtkissens zu vermeiden, ist es von Vorteil, wenn zwischen dem Kanal und dem Rückschlagventil zusätzlich ein Überdruckventil an das Rohr angeschlossen ist. Vorzugsweise sind das Rückschlagventil und ggf. das Überdruckventil einstellbar ausgebildet.

Eine besonders handliche Anordnung des Aufblasstutzens und der mit ihm verbundenen Elemente wird erzielt, wenn an dem Rohr ein quer davon abstehendes Griffstück angebracht ist, welches eine Gewindebohrung zum Anschluß der Druckgasquelle und einen die Gewindebohrung mit dem vor dem Rückschlagventil befindlichen Innenraum des Rohres verbindenden Gaskanal aufweist, und wenn in die Gewindebohrung ein Durchstichdorn für die Kappe einer in die Gewindebohrung einschraubbaren Druckgasflasche verschiebbar hineinreicht, dessen äußeres Ende abgedichtet aus dem Griffstück herausgeführt ist und an einen Betätigungshebel angreift, der an das Griffstück angelenkt ist.

Vorzugsweise wird das erfindungsgemäße Dichtkissen nach seiner Anbringung in der zu verschließenden Öffnung oder dgl. durch ein Druckgas, wie Preßluft, Kohlendioxid oder Stickstoff, aufgebläht. Jedoch kann es auch auf andere Weise mit vergleichbarer Wirksamkeit aufgebläht werden, wenn das den Aufblasstutzen bildende Rohr zur Zuführung eines im Innenraum des Sackes expandierenden Schaums ausgebildet ist.

Weitere Einzelheiten der Erfindung werden nachfolgend anhand der Zeichnungen näher erläutert, in welchen Ausführungsbeispiele der Erfindung in schematischer Darstellungsweise gezeigt sind. In den Zeichnungen zeigt:
- Fig. 1: in abgebrochener Darstellung ein flachliegendes unaufgeblasenes Dichtkissen gemäß einer ersten Ausführungsform,
- Fig. 2: das aufgeblasene Dichtkissen nach Fig. 1,
- Fig. 3: ein flachliegendes unaufgeblasenes Dichtkissen gemäß einer zweiten Ausführungsform,
- Fig. 4: das aufgeblasene Dichtkissen nach Fig. 3,
- Fig. 5 und 6: eine dritte and eine vierte Ausführungsform des Dichtkissen in Flachlage,
- Fig. 7 bis 9: aufgeblasene Dichtkissen in unterschiedlichen Anwendungssituationen,
- Fig. 10 bis 12: Draufsichten auf aufgeblasene Dichtkissen, mit denen in der Querschnittsform unterschiedliche Kanaleinläufe verstopft sind und
- Fig. 13: eine teilweise geschnittene Seitenansicht einer Aufblasvorrichtung.

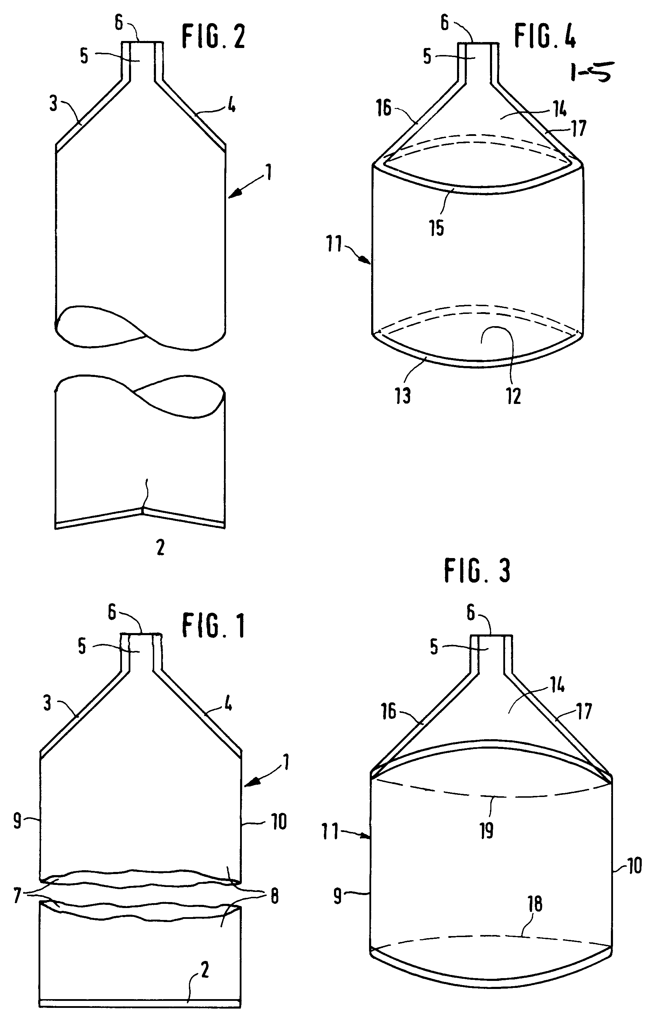

Das in den den Fig. 1 und 2 dargestellte Dichtkissen wird von einem aus einen Folienschlauchabschnitt hergestellten Sack 1 gebildet, der an seinem unteren Ende durch eine Querschweißnaht 2 gasdicht verschlossen ist. An seinem oberen Ende ist der Sack 1 sich flaschenhalsförmig verjüngend zugeschnitten und an den Zuschnittkanten durch gasdichte Schweißnähte 3 und 4 verschlossen. In ihrem oberen Bereich verlaufen die Schweißnähte 3 und 4 parallel zueinander und definieren dadurch einen aus der Folie des Sackes 1 gebildeten Kanal 5, der einerseits mit dem Innenraum des Sackes 1 verbunden ist und andererseits mit einer äußeren Öffnung 6 endet. Kanal 5 und Öffnung 6 dienen auf weiter unten noch beschriebene Weise zum Aufblasen des Sackes 1. Im flachliegenden Zustand, wie er in Fig. 1 angegeben ist, liegen zwei Folienwände des Sackes 1 aufeinander, die wegen der Herstellung des Sackes 1 aus einem Schlauchabschnitt einteilig sind und parallel zueinander verlaufende gefaltete Seitenkanten 9 und 10 bilden. Im aufgeblasenen Zustand des Sackes 1, wie er in Fig. 2 dargestellt ist, verschwinden diese gefalteten Seitenkanten 9 und 10, weil der Sack 1 in seinem mittleren Bereich eine etwa zylinderische Form annimmt. Dies ist durch die Abbruchlinien in Fig. 2 angedeutet.

Auch bei der in den Fig. 3 und 4 dargestellten Ausführungsform des Dichtkissens ist der Sack 11 im wesentlichen aus einem Folienschlauchabschnitt gebildet. Im Unterschied zu der mit Bezug auf die Fig. 1,2 beschriebenen Ausführungsform ist der Sack 11 an seinem unteren Ende durch eine gesondert eingesetzte kreisförmige Folienwand 12 verschlossen, die durch eine gasdichte Umfangsschweißnaht 13 mit der durch den Schlauchabschnitt gebildeten Sackwand verbunden ist. Bei dieser Ausführungsform wird die flaschenhalsförmige Verjüngung am Aufblasende des Sackes durch einen gesondert eingesetzten Folientrichter 14 gebildet, der an dem Umfang seiner größeren Öffnung durch eine gasdichte Umfangsschweißnaht 15 mit der durch den Schlauchabschnitt gebildeten Sackwand verbunden ist. Der Folientrichter 14 geht an seiner kleineren Öffnung wiederum in einen dem Aufblasen des Dichtkissens dienenden Kanal 5 mit einer äußeren Öffnung 6 über. Im gezeigten Beispiel ist der Folientrichter 14 durch zwei Folienwände gebildet, die durch gasdichte Schweißnähte 16 und 17 miteinander verbunden sind. Im flachliegenden Zustand bilden die untere Folienwand 12 und der Folientrichter 14 nach innen eingeschlagene Falten, die in Fig. 3 bei 18 bzw. 19 angedeutet sind.

Selbstverständlich kann auch bei der in den Fig. 1 und 2 dargestellten Ausführungsform anstelle des unteren Verschlusses des Sackes 1 durch eine Querschweißnaht eine kreisrunde Folienwand 12 eingesetzt sein. Alternativ dazu kann am Aufblasende der Ausführungsform gemäß der Fig. 1 und 2 anstelle des flaschenhalsförmigen Zuschnittes ein Folientrichter 14 eingesetzt werden.

Auch die in den Fig. 3 und 4 dargestellte Ausführungsform des Dichtkissens führt nach dem Aufblasen des Sackes 11 zu einer im wesentlich zylindrischen Form eines Dichtkissens. Diese Formgebung läßt sich durch entsprechende geometrische Gestaltung der Folienwand 12 und des Folientrichters 14 beeinflußen. Beispielsweise könnte die Folienwand 12 quadratisch geformt sein, während der Folientrichter 14 entsprechend die Form eines Pyramidenstumpfes erhalten könnte. Die Umfänge einer solchen Folienwand und der größeren Pyramidenstumpfseite wären natürlich auf den Umfang der aus dem Schlauchabschnitt gebildeten Sackwand abzustimmen. Selbstverständlich kann diese Sackwand bei quadratischer Gestaltung der Folienwand 12 und des Folientrichters 14 auch aus vier entsprechenden gleichgroßen Folienwandteilen zusammengesetzt sein.

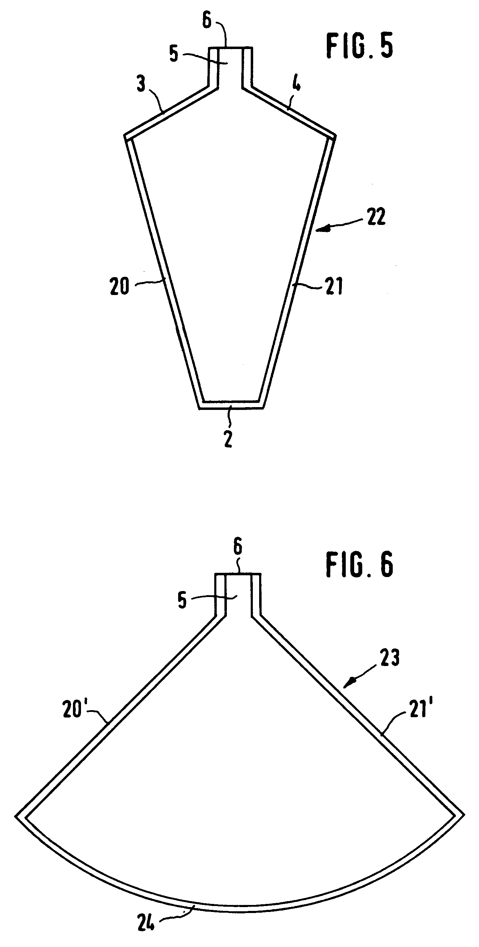

Die Sackwand muß nicht aus einem Folienschlauchabschnitt gebildet sein, sie kann auch aus zwei aufeinanderliegenden identischen Folienwänden gebildet sein, wie aus den in den Fig. 5 und 6 dargestellten Ausführungsformen hervorgeht. Hierbei sind die beiden identischen Folienwände mindestens an ihren Seitenkanten durch gasdichte Seitenschweißnähte 20 und 21 miteinander verbunden, nämlich dann, wenn oben und/oder unten Folientrichter bzw. Folienwände eingesetzt werden sollen, wie sie mit Bezug auf die in den Fig. 3 und 4 dargestellte Ausführungsform beschrieben worden sind. Die Seitenschweißnähte können bei flach und ausgebreitet liegendem Sack so angeordnet sein, daß sie parallel zueinander verlaufende Seitenkanten bilden, wodurch Dichtkissenformen erhalten werden, wie sie mit Bezug auf die Fig. 1 bis 4 beschrieben worden sind. Die Seitenschweißnähte 20 und 21 bzw. 20′ und 21′ können aber auch bei flach und ausgebreitet liegendem Sack Seitenkanten bilden, die in Richtung eines der beiden Sackenden zueinander konvergierend verlaufen. Die Ausführungsform gemäß Fig. 5 bildet einen Sack 22 mit nach unten konvergierend verlaufenden Seitenkanten. Der Sack 22 ist unten durch eine gasdichte Querschweißnaht 2 verschlossen. Oben ist der Sack 22 zu einer Flaschenhalsform zugeschnitten und durch gasdichte Schweißnähte 3 und 4 verschlossen. Im (nicht dargestellten) aufgeblasenen Zustand besitzt das Dichtkissen gemäß Fig. 5 eine schlanke Kegelform, wie sie für bestimmte Anwendungsfälle besonders geeignet ist.

Bei der Ausführungsform gemäß Fig. 6 konvergieren die Seitenkanten bzw. die Seitenschweißnähte 20′ und 21′ in Richtung des Aufblasendes des Sackes 23, wobei die Seitenschweißnähte 20′, 21′ oben zur Bildung des Kanals 5 einen abgeknickten Verlauf nehmen. Unten sind die beiden identischen Folienwände des Sackes 23 durch eine gasdichte bogenförmige Schweißnaht 24 verschlossen. Im (nicht dargestellten) aufgeblasenen Zustand besitzt auch das Dichtkissen gemäß der Ausführungsform nach Fig. 6 im wesentlichen eine Kegelform.

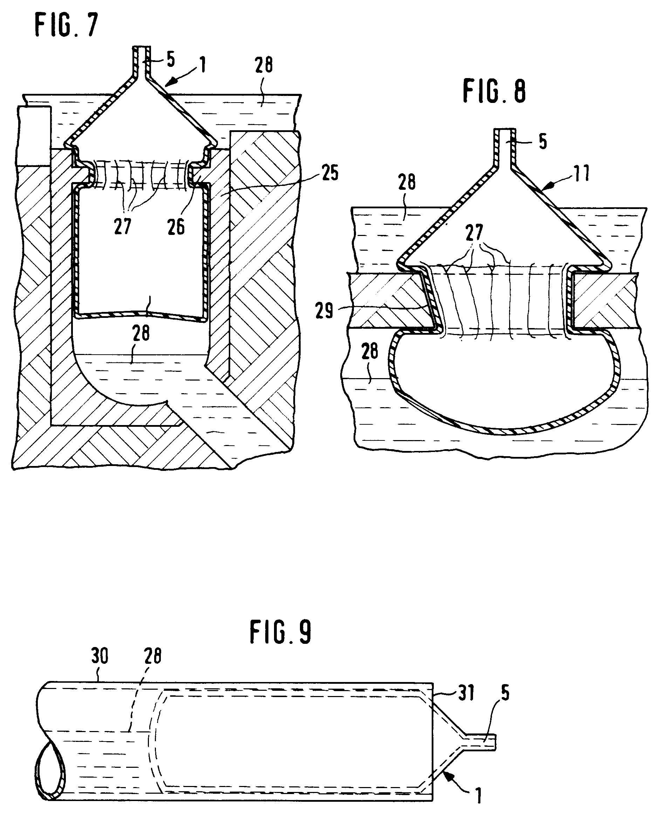

Fig. 7 veranschaulicht die Anbringung eines erfindungsgemäßen Dichtkissens, wie es etwa durch die mit Bezug auf die Fig. 1 bis 4 beschriebenen Ausführungsformen gegeben ist, in einem Kanaleinlauf 25 aus Beton. Der Kanaleinlauf 25 besitzt an seinem oberen Ende eine Ringschulter 26, die normalerweise den (nicht dargestellten) Kanaldeckel trägt. Diese Ringschulter 26 bildet eine Verengung, die beim Aufblasen des im flachen oder nur wenig aufgeblasenen Zustand eingesetzten Dichtkissens am Dichtkissen eine Einschnürungsstelle verursacht. Oberhalb und unterhalb der Ringschulter 26 bzw. der Einschürungsstelle des Dichtkissens bildet dieses jeweils eine Ausbauchung, welche die Ringschulter 26 übergreift bzw. untergreift, wodurch das aufgeblasene Dichtkissen fest in dem Kanaleinlauf 25 verankert ist. Beim Aufblasen des Dichtkissens kommt es im Bereich der Ringschulter zu einer bei 27 angedeuteten Faltenbildung, welche jedoch die Abdichtwirkung nicht beeinträchtig. Wie in der Schnittzeichnung gemäß Fig. 7 angedeutet ist, ergibt sich eine praktisch formschlüssige Anpassung des Dichtkissens an die Wandungsgegebenheiten des Einlaufs 25, so daß eine an der Oberfläche anstehende Flüssigkeit 28 nicht in den Kanaleinlauf 25 gelangen kann.

In den Fig. 7 bis 9 ist die Dicke der zur Herstellung der Dichtkissen verwendeten Folie zur schematischen Zeichnungsvereinfachung übertrieben groß dargestellt. Verwendet wird beispielsweise eine Polyethylenfolie von etwa 200 µm Dicke. Dementsprechend ergeben sich im flachliegenden Zustand Dichtkissen, die noch auf wesentlich kleinere Größe durch Faltung zusammengelegt werden können, als es in den Fig. 1, 3, 5 und 6 dargestellt ist.

In Fig. 8 ist eine Anwendungssituation dargestellt, bei der eine durch das erfindungsgemäße Dichtkissen zu verstopfende Öffnung 29 rechts und links von der Mittellinie unterschiedlich ausgebildet ist. Während die Öffnung 29 linksseitig von einer konischen Wand begrenzt ist, ist rechtsseitig eine zylindrische Wand vorgesehen. Für den Abdichteffekt macht das allerdings keinen Unterschied, wie Fig. 8 verdeutlicht. Durch das Aufblasen des Dichtkissens wird dessen Folie in beiden Fällen eng sowohl an die Wandung der Öffnung 29 als auch an die oberen und unteren Öffnungsränder angepreßt, wobei wiederum eine die Abdichtwirkung nicht beeinflußende Faltenbildung 27 entsteht und außerdem Ausbauchungen des Dichtkissens oberhalb und unterhalb der Öffnung 29 gebildet werden, die das Dichtkissen fest in der Öffnung 29 verankern. Flüssigkeit, Gase und Stäube können weder in die Öffnung 29 eindringen noch aus dieser austreten.

Fig. 9 veranschaulicht den mit Hilfe eines erfindungsgemäßen Dichtkissens erzielten Verschluß eines Rohres 30, in welches ein Dichtkissen von der Rohröffnung 31 her eingeführt ist. Nach dem Aufblasen des Dichtkissens ist dieses im Rohrende fest fixiert, so daß das Rohrende dicht verschlossen ist.

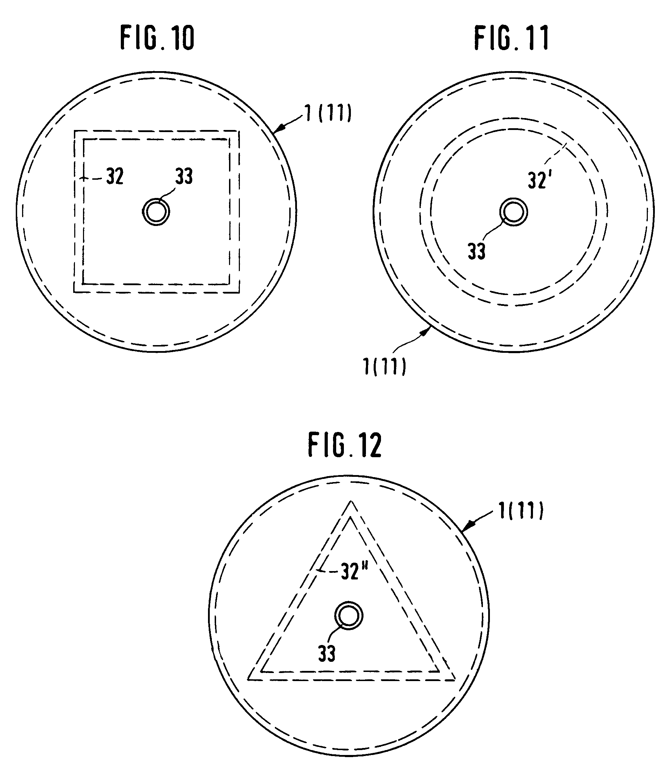

In den Fig. 10 bis 12 ist in schematischen Draufsichten veranschaulicht, das mit Hilfe eines erfindungsgemäßen Dichtkissens geometrisch sehr unterschiedlich geformte Einläufe bzw. Öffnungen verschlossen werden können. In Fig. 10 ist eine Öffnung 32 mit quadratischem Querschnitt dargestellt, in Fig. 11 besitzt die Öffnung 32′ einen kreisrunden Querschnitt und in Fig. 12 besitzt die Öffnung 32˝ die Querschnittsform eines gleichseitigen Dreiecks. Das Dichtkissen selbst besitzt außerhalb der Öffnung eine die Öffnungsränder erheblich übergreifende ausgebauchte Zylinderform. Weitere Einzelheiten der Dichtkissen sind in den Fig. 10 bis 12 nicht dargestellt. Im Zentrum der drei Darstellungen ist jeweils die Stirnansicht eines Rohres 33 eingezeichnet, welches auf nachfolgend beschriebene Weise den Aufblasstutzen bildet.

Das Rohr 33 kann in seiner einfachsten Ausgestaltung ein Rohrstück sein, das außen mit einem als Innengewinde oder Außengewinde ausgebildeten Gewindeanschluß für die Verbindung mit einer Druckgasquelle ausgebildet ist. Außerdem kann in diesem Rohrstück ein gasdichtes Absperrorgan vorgesehen sein. Eine derartig einfache Ausbildung des Aufblasstutzens ist in den Zeichnungen nicht dargestellt.

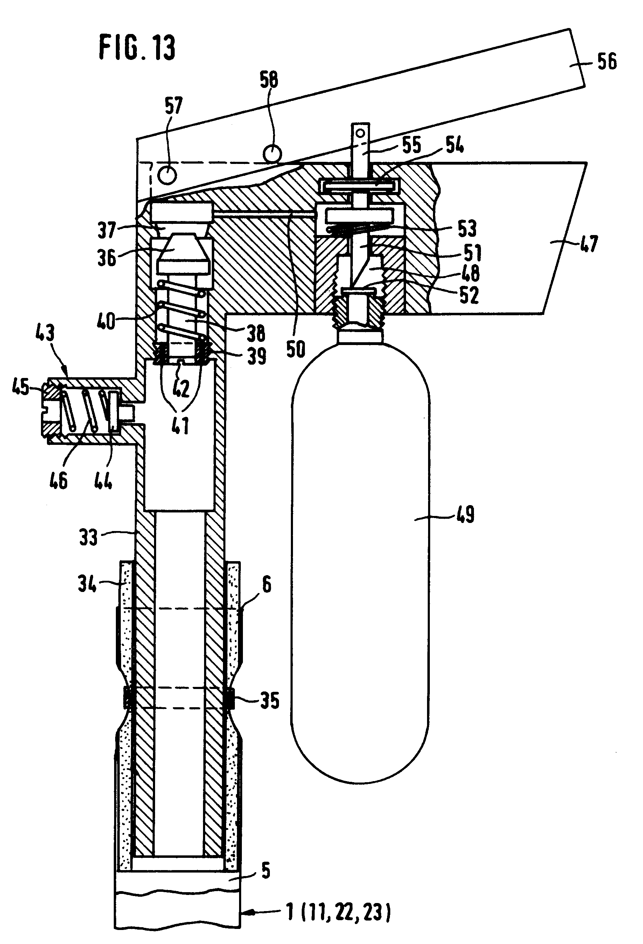

Wie Fig. 13 veranschaulicht ist auf das Rohr 33 eine ebenfalls rohrförmige Dichtungsmanschette 34 aufgeschoben, die aus einem weichen elastischen Material hergestellt ist, beispielsweise aus einem geschlossenzelligen Kunststoffschaum oder aus Moosgummi. Rohr 33 und Dichtungsmanschette 34 sind in den Kanal 5 des Dichtkissens eingeführt. Eine die Folienwand des Kanals 5 von außen umschließende Schlauchschelle 35 preßt die Folienwandung gegen die Dichtungsmanschette 34 und die Dichtungsmanschette 34 gegen die Außenfläche des Rohres 33, wodurch ein gasdichter Abschluß entsteht. Als Schlauchschelle sind handelsübliche Schnellverschlußbänder geeignet, die an einem Ende eine Öse besitzen, durch welche das zungenförmige andere Ende des Bandes nur in Einschnürungsrichtung gezogen werden kann, in der Gegenrichtung jedoch blockiert ist. Auf diese Weise läßt sich die Aufblasvorrichtung vor Ort sehr schnell mit einem erfindungsgemäßen Dichtkissen gasdicht verbinden.

Im gezeigten Ausführungsbeispiel ist im Rohr 33 als Absperrglied ein Rückschlagventil angeordnet, dessen Ventilglied 36 mit einem im Rohr angeordneten Ventilsitz 37 zusammenwirkt. Das Ventilglied 36 ist mit einem Ventilschaft 38 in einer Gewindehülse 39 gegen die Kraft einer Schraubendruckfeder 40 verschiebbar geführt, die sich zu diesem Zweck einerseits am Ventilglied 36 und andererseits an der Gewindehülse 39 abstützt. In der Gewindehülse 39 befinden sich Gasdurchtrittsbohrungen 41 und ein Betätigungsschlitz 42 zum Drehen der Gewindehülse 39 zwecks Einstellung der Federspannung. Bei Abfall des Gasdruckes vor dem Rückschlagventil schließt dieses selbsttätig, wodurch der Aufblasdruck im Dichtkissen aufrechterhalten bleibt.

Zwischen dem beschriebenen Rückschlagventil und dem zum Dichtkissen weisenden Ende des Rohres 33 befindet sich noch ein an das Rohrinnere angeschlossenes Überdruckventil 43, im wesentlichen bestehend aus einem Verschlußglied 44, einer einstellbaren Gewindehülse 45 und einer zwischen dem Verschlußglied 44 und der Gewindehülse 45 eingespannten Schraubendruckfeder 46, deren Spannung mittels der Gewindehülse 45 einstellbar ist. Auslegung und Einstellung des Überdruckventils erfolgt so, daß es bei Überschreiten des zugelassenen Aufblasdruckes für das Dichtkissen anspricht, um eine Beschädigung des Dichtkissens durch übermäßige Innendruckbeaufschlagung zu verhindern.

Hinter dem Rückschlagventil könnte das Rohr mit einem Außen- oder einem Innengewinde zum Anschluß einer Druckgasquelle, beispielsweise eines Preßluftschlauches, enden. Diese einfache Ausführungsform der Füllvorrichtung ist in der Zeichnung nicht dargestellt. Bei dem Ausführungsbeispiel gemäß Fig. 13 ist einstückig mit dem Rohr 33 ein quer davon abstehendes Griffstück 47 angebracht. Im Griffstück 47 befindet sich eine Gewindebohrung 48 für den Gewindeanschluß einer Druckgasflasche 49. Weiterhin ist im Griffstück 47 ein Gaskanal 50 vorgesehen, welcher die Gewindebohrung 48 mit dem vor dem Rückschlagventil befindlichen Innenraum des Rohres 33 verbindet. In die Gewindebohrung 48 greift ein Durchstichdorn 51 ein, mit dessen Hilfe die Kappe 52 der Druckgasflasche 49 im Bedarfsfall perforiert werden kann. Der Durchstichdorn 51 wird durch eine Schraubendruckfeder 53 gegen eine dicht im Griffstück 47 eingespannte elastische Membran 54 gedrückt, der von außen ein Betätigungsstift 55 anliegt. Dieser ebenfalls verschiebbar im Griffstück 47 verschiebbar geführte Betätigungsstift 55 ist gelenkig mit einem Betätigungshebel 56 verbunden, der seinerseits über einen Lagerzapfen 57 gelenkig mit dem Griffstück 47 verbunden ist. Es ist ersichtlich, daß eine Schwenkbetätigung des Betätigungshebels 56 im Uhrzeigersinn zu einer Verschiebung des Durchstichdorns 51 und damit zu einer Aktivierung der Druckgasflasche 49 führt. Zur Verhinderung einer unbeabsichtigten Betätigung kann ein herausziehbarer Sperrstift 58 vorgesehen sein.

In geeigneten Fällen kann ein erfindungsgemäß ausgebildetes Dichtkissen anstelle einer Aufblasung mittels eines geeigneten Gases auch mit einem expandierenden Schaum und sogar mit Wasser gefüllt werden, wobei es sich in allen Fällen aufweitet und den Verschluß eines Einlaufs oder einer Öffnung bewirken kann.

In den Figuren 7 bis 9 sind zur Vereinfachung in den Kanälen 5 keine Aufblasrohre 33 dargestellt. In Fig. 13 ist das Rückschlagventil nur schematisch angegeben. In der Praxis erfolgt seine Ausbildung so, daß es nach dem Aufblasen des Kissens automatisch schließt, bevor das Überdruckventil anspricht, und sich automatisch öffnet, wenn der Aufblasdruck im Kissen abgefallen ist und wieder auf den Solldruck gebracht werden soll.

Obwohl trotz der durch das Sackübermaß hervorgerufenen Faltenbildung 27 (Fig. 7 und 8) regelmäßig eine gute Abdichtung erzielt wird, kann die Abdichtwirkung in bestimmten Anwendungsfällen noch weiter verbessert werden, wenn vor Anbringung des Dichtkissens die abzudichtenden Wandflächen, Ränder und dgl. mit einem geeigneten elastischen Dichtmaterial belegt werden, z.B. einem Dichtmaterial auf Siliconbasis, PU-Schaum und dgl. In manchen Fällen ist es sogar ausreichend, wenn ein Füllmaterial, wie Erdreich, Sand und dgl. beigefüllt wird, um etwaige Spaltleckagen abzudichten.

Da für die Ausbildung des erfindungsgemäßen Dichtkissens unterschiedliche Folienwerkstoffe verwendet werden können, stehen praktisch gegen alle abzudichtenden Medien geeignete, d.h. hinreichend beständige Kissenmaterialen zur Verfügung.

In Fig. 13 können Durchstichdorn 51 und Betätigungsstift 55 auch einteilig ausgebildet oder miteinander verbunden und abgedichtet durch die Membran 54 hindurchgeführt sein.

## Patentansprüche

1. Aufblasbares Dichtkissen zum Verstopfen von Öffnungen oder Durchgängen, insbesondere von Kanaleinläufen und Rohren, bestehend aus einem Sack (1, 11, 22, 23) aus dünnem, flexiblem und thermoplastischem Kunststoffmaterial, der an einem Ende dicht verschlossen ist, an seinem anderen Ende mit einem Aufblasstutzen abgedichtet verbunden ist und gegenüber der abzudichtenden Öffnung oder dem abzudichtenden Durchgang Übermaß aufweist, wobei der aufgeblasene Sack an den Rändern und Wandungen der Öffnung oder des Durchgangs dicht anliegt, dadurch gekennzeichnet, daß der Sack (1, 11, 22, 23) aus einer im wesentlichen unelastischen thermoplastischen Kunststoffolie einer Foliendicke zwischen etwa 50 µm und 500 µm gebildet ist, an seinem dichtverschlossenen Ende nur durch in der Kunststoffolie angebrachte Nähte verschlossen ist, im unaufgeblasenen Zustand ohne Faltehbildung flach zusammenlegbar ist und sich erst beim Aufblasen unter Faltenbildung (27) dicht an die Ränder und Wandungen der Öffnung oder des Durchgangs anlegt.

2. Dichtkissen nach Anspruch 1, dadurch gekennzeichnet, daß der Sack (1, 11) aus einem Folienschlauchabschnitt gebildet ist, der an einem Ende vollständig verschlossen ist und an seinem Aufblasende für den Anschluß eines Aufblasstutzens sich flaschenhalsförmig verjüngt.

3. Dichtkissen nach den Ansprüchen 1 und 2, dadurch gekennzeichnet, daß der vollständige Verschluß des Sackes (1, 22) an seinem einen Ende durch eine durchgehende dichte Quernaht (2) erzielt ist.

4. Dichtkissen nach den Ansprüchen 1 und 2, dadurch gekennzeichnet, daß der vollständige Verschluß des Sackes (11) an seinem einen Ende durch eine gesondert eingesetzte Folienwand (12) erzielt ist, die an ihrem Umfang durch eine dichte Naht (13) mit der Sackwand verbunden ist.

5. Dichtkissen nach einem der Ansprüche 1 bis 4, dadurch gekennzeichnet, daß das Aufblasende des Sackes (1, 22) sich flaschenhalsförmig verjüngend zugeschnitten und an den Zuschnittkanten durch dichte Nähte (3, 4) verschlossen ist.

6. Dichtkissen nach einem der Ansprüche 1 bis 4, dadurch gekennzeichnet, daß das sich flaschenhalsförmig verjüngende Aufblasende des Sackes (11) durch einen gesondert eingesetzten Folientrichter (14) gebildet ist, der an dem Umfang seiner größeren Öffnung durch eine dichte Naht (15) mit der Sackwand verbunden und an seiner kleineren Öffnung für den Anschluß des Aufblasstutzens ausgebildet ist.

7. Dichtkissen nach einem der Ansprüche 1 bis 6, dadurch gekennzeichnet, daß der Sack (22, 23) aus zwei aufeinanderliegenden identischen Folienwänden gebildet ist, die mindestens an ihren Seitenkanten durch dichte Nähte (20, 21; 20′, 21′) miteinander verbunden sind.

8. Dichtkissen nach einem der Ansprüche 1 bis 7, dadurch gekennzeichnet, daß bei flach und ausgebreitet liegendem Sack (1, 11) seine Seitenkanten (9, 10) parallel zueinander verlaufen.

9. Dichtkissen nach einem der Ansprüche 1 bis 7, dadurch gekennzeichnet, daß bei flach und ausgebreitet liegendem Sack (22, 23) seine Seitenkanten in Richtung eines der beiden Sackenden zueinander konvergierend verlaufen.

10. Dichtkissen nach einem der Ansprüche 1 bis 9, dadurch gekennzeichnet, daß der Sack (1, 11, 22, 23) aus einer Folie aus einem Kunststoff, ausgewählt aus der Gruppe Polyethylen, Polypropylen und Polyvinylchlorid gebildet ist.

11. Dichtkissen nach Anspruch 10, dadurch gekennzeichnet, daß die Foliendicke etwa 200 µm beträgt.

12. Dichtkissen nach einem der Ansprüche 1 bis 11, dadurch gekennzeichnet, daß die den Sack (1, 11, 22, 23) dicht verschließenden Nähte als Schweißnähte ausgebildet sind.

13. Dichtkissen nach einem der Ansprüche 1 bis 12, dadurch gekennzeichnet, daß der Sack (1, 11, 22, 23) an seinem Aufblasende mit einem aus seiner Folie gebildeten Kanal (5) endet, der einerseits mit dem Innenraum des Sackes verbunden ist und andererseits mit einer äußeren Öffnung (6) endet, in welche ein den Aufblasstutzen bildendes Rohr (33) einführbar ist, an welchem die den Kanal (5) bildende Folienwand dicht anschließbar ist.

14. Dichtkissen nach Anspruch 13, dadurch gekennzeichnet, daß die den Kanal (5) bildende Folienwand unter Zwischenlage einer auf das Rohr (33) aufgesteckten weichen Dichtungsmanschette (34) durch mindestens eine Schlauchschelle (35) an das Rohr (33) anschließbar ist.

15. Dichtkissen nach Anspruch 13 oder 14, dadurch gekennzeichnet, daß das Rohr (33) über ein darin als Absperrglied angebrachtes, den Aufblasdruck begrenzendes Rückschlagventil (36, 37) mit einer Druckgasquelle verbindbar ist.

16. Dichtkissen nach den Ansprüchen 13 bis 15, dadurch gekennzeichnet, daß zwischen dem Kanal (5) und dem Rückschlagventil (36, 37) zusätzlich ein Überdruckventil (43) an das Rohr (33) angeschlossen ist.

17. Dichtkissen nach Anspruch 15 oder 16, dadurch gekennzeichnet, daß das Rückschlagventil (36, 37) und ggf. das Überdruckventil (43) einstellbar ausgebildet sind.

18. Dichtkissen nach den Ansprüchen 13 bis 17, dadurch gekennzeichnet, daß an dem Rohr (33) ein quer davon abstehendes Griffstück (47) angebracht ist, welches eine Gewindebohrung (48) zum Anschluß der Druckgasquelle und einen die Gewindebohrung (48) mit dem vor dem Rückschlagventil (36, 37) befindlichen Innenraum des Rohres (33) verbindenden Gaskanal (50) aufweist, und daß in die Gewindebohrung (48) ein Durchstichdorn (51) für die Kappe (52) einer in die Gewindebohrung (48) einschraubbaren Druckgasflasche (49) verschiebbar hineinreicht, dessen äußeres Ende abgedichtet aus dem Griffstück (47) herausgeführt ist und an einen Betätigungshebel (56) angreift, der an das Griffstück (47) angelenkt ist.

19. Dichtkissen nach einem der Ansprüche 1 bis 13, dadurch gekennzeichnet, daß das den Aufblasstutzen bildende Rohr (33) zur Zuführung eines im Innenraum des Sackes (1, 11 22, 23) expandierenden Schaums ausgebildet ist.

## Claims

1. Inflatable sealing cushion for plugging openings or passages, especially drain inlets and pipes, consisting of a bag (1, 11, 22, 23) of thin, flexible thermoplastics material, which is sealingly closed at one end and is connected at its other end sealingly to an inflating tube and is of greater dimensions than the opening or passage to be sealed, the inflated bag bearing sealingly against the edges and wall faces of the opening or passage, characterized in that the bag (1, 11, 22, 23) is formed of a basically inelastic, thermoplastics sheet having a sheet thickness of between about 50 µm and 500 µm, is closed at its sealingly closed end only by seams formed in the plastics sheet, can be collapsed flat without formation of folds in the uninflated state and only when inflated bears with formation of folds (27) sealingly against the edges and wall faces of the opening or passage.

2. Sealing cushion according to Claim 1, characterized in that the bag (1, 11) is formed of one piece of tubular sheet, which is completely closed at one end and tapers in the form of a bottleneck at its inflating end for the attachment of an inflating tube.

3. Sealing cushion according to one of Claims 1 and 2, characterized in that the complete closure of the bag (1, 22) at its one end is achieved by a continuous, leaktight transverse seam (2).

4. Sealing cushion according to Claims 1 and 2, characterized in that the complete closure of the bag (11) at its one end is obtained by a separately inserted sheet wall (12), which is connected at its periphery to the bag wall by a leaktight seam (13).

5. Sealing cushion according to one of Claims 1 to 4, characterized in that the inflating end of the bag (1, 22) is cut to taper to a bottleneck shape and is closed at the edges of the cut blank by leaktight seams (3, 4).

6. Sealing cushion according to one of Claims 1 to 4, characterized in that the bottleneck-shaped, tapering inflating end of the bag (11) is formed by a separately inserted sheet funnel (14), which is connected at the periphery of its larger opening by a leaktight seam (15) to the bag wall and is constructed at its smaller opening for the attachment of the inflating tube.

7. Sealing cushion according to one of Claims 1 to 6, characterized in that the bag (22, 23) is formed of two identical sheet walls lying one against the other, which are connected together at least at their lateral edges by leaktight seams (20, 21; 20', 21').

8. Sealing cushion according to one of Claims 1 to 7, characterized in that, when the bag (1, 11) is flat and spread out, its lateral edges (9, 10) are parallel to one another.

9. Sealing cushion according to one of Claims 1 to 7, characterized in that, when the bag (22, 23) is flat and spread out, its lateral edges converge towards each other in the direction of one of the two ends of the bag.

10. Sealing cushion according to one of Claims 1 to 9, characterized in that the bag (1, 11, 22, 23) is formed of a sheet of a plastics material, selected from the group polyethylene, polypropylene and polyvinyl chloride.

11. Sealing cushion according to Claim 10, characterized in that the sheet thickness is about 200 µm.

12. Sealing cushion according to one of Claims 1 to 11, characterized in that the seams which sealingly close the bag (1, 11, 22, 23) are formed as weld seams.

13. Sealing cushion according to one of Claims 1 to 12, characterized in that the bag (1, 11, 22, 23) terminates at its inflating end with a duct (5) formed out of its sheet, which duct on the one hand is connected to the internal space of the bag and on the other hand ends with an outer opening (6), into which a pipe (33) forming the inflating tube can be introduced, to which pipe the sheet wall forming the duct (5) can be sealingly attached.

14. Sealing cushion according to Claim 13, characterized in that the sheet wall forming the duct (5) can be connected to the pipe (33) by at least one hose clip (35), with the incorporation therebetween of a soft sealing sleeve (34) pushed onto the pipe (33).

15. Sealing cushion according to Claim 13 or 14, characterized in that the pipe (33) can be connected to a pressurized gas source by a non-return valve (36, 37) which limits the inflating pressure, fitted into the pipe as a blocking element.

16. Sealing cushion according to Claims 13 to 15, characterized in that, between the duct (5) and the non-return valve (36, 37), a pressure relief valve (43) is additionally connected to the pipe (33).

17. Sealing cushion according to Claim 15 or 16, characterized in that the non-return valve (36, 37) and possibly also the pressure relief valve (43) are constructed to be adjustable.

18. Sealing cushion according to Claims 13 to 17, characterized in that on the pipe (33) a handle (47) projecting transversely therefrom is mounted, which comprises a threaded bore (48) for the attachment of the compressed gas source and a gas duct (50) connecting the threaded bore (48) with the internal space of the pipe (33) situated upstream of the non-return valve (36, 37), and that a perforating pin (51) for the cap (52) of a compressed gas bottle (49) which can be screwed into the threaded bore (48) penetrates slidingly into the threaded bore (48), the outer end of which pin projects outwards in sealed manner from the handle (47) and is connected to an actuating lever (56), which is articulated to the handle (47).

19. Sealing cushion according to one of Claims 1 to 13, characterized in that the pipe (33) forming the inflating tube is constructed for supplying a foam which expands inside the bag (1, 11, 22, 23).

## Revendications

1. Bouchon gonflable pour obturer des ouvertures ou des passages, en particulier des entrées de canal et des tuyaux, constitué d'un sac (1, 11, 22, 23) qui est fabriqué en un matériau thermoplastique mince et flexible, qui est obturé de façon étanche à une extrémité, qui, à son autre extrémité, est relié de façon étanche à une tubulure de gonflage et qui présente une surcote par rapport à l'ouverture à obturer ou au passage à obturer, étant précisé que le sac, gonflé, s'appuie contre les bords et les parois de l'ouverture ou du passage, bouchon caractérisé par le fait que le sac est formé d'une feuille thermoplastique sensiblement non élastique d'une épaisseur comprise entre environ 50 µm et 500 µm, qu'à son extrémité obturée de façon étanche il n'est obturé que par des jonctions rapportées dans la feuille de plastique, qu'à l'état non gonflé il peut se mettre globalement à plat sans former de plis et que ce n'est que lors du gonflage et sans former de plis (27) qu'il s'appuie de façon étanche contre les bords et les parois de l'ouverture ou du passage.

2. Bouchon selon la revendication 1, caractérisé par le fait que le sac (1, 11) est formé d'un tronçon de boyau en feuille qui est complètement obturé à une extrémité et qui, à son extrémité de gonflage, va en diminuant en forme de goulot de bouteille pour se raccorder à une tubulure de gonflage.

3. Bouchon selon la revendication 1 et 2, caractérisé par le fait que l'obturation complète du sac (1, 22) sa première extrémité s'obtient au moyen d'une jonction transversale continue étanche (2).

4. Coussin selon la revendication 1 et 2, caractérisé par le fait que l'obturation complète du sac (11) à sa première extrémité s'obtient au moyen d'une paroi en feuille (12) qui est insérée à part et qui est reliée,à sa périphérie, avec la paroi du sac par une jonction étanche (13).

5. Bouchon selon l'une des revendications 1 à 4, caractérisé par le fait que l'extrémité de gonflage du sac (1, 22) est tronçonnée en allant en diminuant en forme de goulot de bouteille et qu'elle est obturée aux bords tronçonnés par des jonctions étanches (3, 4).

6. Bouchon selon l'une des revendications 1 à 4, caractérisé par le fait que l'extrémité de gonflage, qui va en diminuant en forme de goulot de bouteille du sac (11) est formée par un entonnoir en feuille (14) qui est inséré à part, qui est relié, à la périphérie de sa plus grande ouverture, avec la paroi du sac par une jonction étanche (15) et dont la forme, à sa plus petite ouverture, est prévue pour le raccordement de la tubulure de soufflage.

7. Bouchon selon l'une des revendications 1 à 6, caractérisé par le fait que le sac (22, 23) est formé de deux parois en feuille, identiques et placées l'une sur l'autre, réunies l'une à l'autre au moins à leurs bords latéraux par des jonctions étanches (20, 21; 20', 21').

8. Bouchon selon l'une des revendications 1 à 7, caractérisé par le fait que lorsque le sac (1, 11) repose à plat et développé, ses bords latéraux (9, 10) sont orientés parallèlement l'un à l'autre.

9. Bouchon selon l'une des revendications 1 à 7, caractérisé par le fait que lorsque le sac (22, 23) repose à plat et développé, ses bords latéraux sont orientés en direction de l'une des deux extrémités du sac, en convergeant l'un vers l'autre.

10. Bouchon selon l'une des revendications 1 à 9, caractérisé, par le fait que le sac est formé d'une feuille d'un plastique choisi dans le groupe constitué du polyéthylène, du polypropylène et du chlorure de polyvinyle.

11. Bouchon selon la revendication 10, caractérisé par le fait que l'épaisseur de la feuille vaut environ 200 µm.

12. Bouchon selon l'une des revendications 1 à 11, caractérisé par le fait que les jonctions qui obturent de façon étanche le sac (1, 11, 22, 23) sont conçues sous forme de jonctions soudées.

13. Bouchon selon l'une des revendications 1 à 12, caractérisé par le fait qu'à son extrémité de gonflage le sac (1, 11, 22, 23) se termine en un canal (5) qui est formé à partir de sa propre feuille et qui, d'une part, est relié avec l'espace intérieur du sac et, d'autre part, se termine par une ouverture extérieure (6) dans laquelle on peut introduire un tube (33) qui forme la tubulure de gonflage et auquel on peut relier de façon étanche la paroi en feuille formant le canal (5).

14. Bouchon selon la revendication 13, caractérisé par le fait que la paroi en feuille formant le canal (5) peut se relier au tube (33) au moyen d'au moins un collier (35) avec interposition d'une manchette d'étanchéité molle (34) enfilée sur le tube (33).

15. Bouchon selon la revendication 13 ou 14, caractérisé par le fait que le tube (33) peut se relier avec une source de gaz sous pression par l'intermédiaire d'un clapet de non-retour (36, 37) qui y est rapporté en tant qu'organe d'arrêt et qui limite la pression de gonflage.

16. Bouchon selon les revendications 13 à 15, caractérisé par le fait qu'entre le canal (5) et le clapet de non-retour (36, 37) est en outre reliée au tube (33) une soupape de sûreté (43).

17. Bouchon selon la revendication 15 ou 16, caractérisé, caractérisé par le fait que le clapet de non-retour (36, 37) et éventuellement la soupape de sûreté (43) sont prévus réglables.

18. Bouchon selon les revendications 13 à 17, caractérisé par le fait que sur le tube (33) est rapportée une poignée (47) qui va en s'en écartant, et qui présente un perçage taraudé (48) pour le raccordement de la source de gaz comprimé, ainsi qu'un canal de gaz (50) qui relie le perçage taraudé (48) avec l'espace intérieur du tube (33) qui se trouve en avant du clapet de non retour (36, 37), et par le fait que dans le perçage taraudé (48) pénètre, avec liberté de coulissement, un poinçon de percement (51) pour le capuchon (52) d'une bouteille de gaz comprimé (49) qui peut se visser dans le perçage taraudé (48), poinçopn dont l'autre extrémité sort, de façon étanche, hors de la poignée (47) et se fixe à un levier de manoeuvre (56) lui-même articulé à la poignée (47).

19. Bouchon selon l'une des revendications 1 à 13, caractérisé par le fait que le tube (33) qui forme la tubulure de gonflage est conçu pour l'introduction d'une mousse expansible dans l'espace intérieur du sac (1, 11, 22, 23).
